# EUROPEAN PATENT SPECIFICATION

(11) **EP 3 540 224 B1**
(45) Date of publication and mention of the grant of the patent: **12.05.2021**
(21) Application number: 16921275.0
(22) Date of filing: 14.11.2016
(51) Int. Cl.: F04B 49/02, F04B 49/06, F04B 17/03

(54) **ELECTRIC PUMP APPARATUS**
ELEKTRISCHE PUMPVORRICHTUNG
APPAREIL DE TYPE POMPE ÉLECTRIQUE

(43) Date of publication of application: 18.09.2019
(73) Proprietor: TBK Co., Ltd., Machida-shi, Tokyo 194-0045 (JP)
(72) Inventor: ARAKI, Makoto, Machida-shi Tokyo 194-0045 (JP); KURAYA, Yoshitaka, Machida-shi Tokyo 194-0045 (JP)
(74) Representative: Fink Numrich Patentanwälte PartmbB
(86) International application number: PCT/JP2016/083646
(87) International publication number: WO 2018/087908

(56) References cited:
- EP-A1- 2 428 705
- DE-A1-102011 085 551
- DE-A1-102011 088 974
- JP-A- 2001 238 482
- JP-A- 2002 213 594
- JP-A- 2005 110 345
- JP-A- 2005 110 345
- JP-A- 2014 241 657

## Description

### TECHNICAL FIELD

The present invention relates to an electric pump device driven by an electric motor.

### TECHNICAL BACKGROUND

Conventionally, there have been known electric pumps which supply a medium such as coolant water, lubricant, or operating oil to an engine section (a section subject to cooling, a section subject to lubrication, or a section subject to operation) by the rotation of an electric motor. The discharge rate of this electric pump changes depending on the rotational speed (rotational frequency) of the motor. Here, a technique of driving the motor by feedback control is widely practically used which, at the time of steady operation of the electric pump, controls the actual rotational speed of the motor to converge to the steady rotational speed so as to control the motor to rotate steadily (see, e.g., JP 2014 241657 A).

### PRIOR ARTS LIST

### PATENT DOCUMENT

EP 2 428 705 A1 discloses a motor control apparatus for an electric oil pump, which is driven by a brushless motor. The brushless motor is driven by open loop control in a period in which a fixed torque is selected as output for start-up. From a time at which a predetermined time period elapsed after actual motor rotation speed reaches a predetermined rotation speed, feedback control is performed to drive the brushless motor.

DE 10 2011 085 551 A1 discloses a method of reducing the load of a motor at startup by open loop control at startup and then switching to closed loop at a predefined minimum rotational speed.

JP 2005 110345 A discloses a start control method of a brushless motor for driving a pump supplying oil to a hydraulic operation mechanism. The brushless motor is started under open loop control at a first starting commutation frequency when the operating oil temperature is higher than a first set temperature of low viscosity. When the rotational speed of the motor reaches a specified rotational speed, the motor is subjected to closed loop control.

### SUMMARY OF THE INVENTION

### PROBLEMS TO BE SOLVED BY THE INVENTION

However, if an electric pump is started up when the viscosity of fluid is high, such as at the time of cold start, an excessive load may act on the motor because of the viscosity resistance of the fluid. Hence, if the motor is feedback controlled at startup of the electric pump, the current supplied to the motor increases proportionally to the deviation from the target rotational speed, and thus the problem occurs that an excess current occurs in the motor, going beyond the rated output.

In view of this problem, the present invention was made, and an object thereof is to provide an electric pump device which can suppress excess output of the motor.

### MEANS TO SOLVE THE PROBLEMS

In order to solve the above problem, an electric pump device according to the present invention comprises a fluid pump that discharges fluid; an electric motor that drives the fluid pump; and a control unit that controls the value of current supplied to the electric motor to control rotation of the motor, thereby controlling the flow rate of fluid discharged from the fluid pump. At startup of the electric motor, until the rotational speed of the electric motor comes near to a target rotational speed set beforehand, the control unit drives the electric motor by open loop control that restricts the value of current supplied to the electric motor to lower than a predetermined upper limit, and when the rotational speed of the electric motor has come near to the target rotational speed, the control unit drives the electric motor by feedback control that keeps the rotational speed at a steady rotational speed.

The electric pump device according to the present invention is configured such that a plurality of specified rotational speeds for the electric motor are set beforehand in the control unit for the open loop control and that in the open loop control, the rotational speed of the electric motor is increased stepwise by controlling supply current to the electric motor using the plurality of specified rotational speeds.

Yet further, the electric pump device according to the present invention is preferably configured to comprise a temperature detector that detects a temperature of fluid and such that at startup of the motor, when the temperature of the fluid detected by the temperature detector is lower than a specified temperature, the open loop control is performed for a relatively long time, and that when the temperature of the fluid detected by the temperature detector is higher than or equal to the specified temperature, the open loop control is performed for a relatively short time.

### ADVANTAGEOUS EFFECTS OF THE INVENTION

According to the present invention, at startup of the motor, until the rotational speed of the motor comes near to the target rotational speed, the motor is driven by open loop control that restricts the value of current supplied to the motor to lower than a predetermined upper limit, and thus the load of the motor at startup can be reduced so that the output of the motor can be suppressed. As a result, the electric pump can be started stably without going beyond the rated output even when the fluid is relatively high in viscosity such as at the time of cold start.

Further, in the present invention, in the open loop control, by increasing the specified rotational speed of the motor stepwise, the temperature of the fluid can be gradually raised (the viscosity resistance of the fluid can be gradually decreased) over time without a rapid increase in the load of the fluid pump, so that the electric pump device can be efficiently started.

Yet further, in the present invention, when the temperature of the fluid is lower than a specified temperature, after the open loop control is performed for a relatively long time, transition to feedback control is made, and when the temperature of the fluid is higher than or equal to the specified temperature, after the open loop control is performed for a relatively short time, transition to feedback control is made, and thus optimum control according to a physical property (the viscosity resistance) of the fluid can be performed, so that the motor can be made to quickly reach steady rotation without wasting electric power.

### BRIEF DESCRIPTIONS OF THE DRAWINGS

FIG. 1 is a block diagram showing schematically the configuration of an electric pump according to the present embodiment.
FIG. 2 is a flow chart showing the flow of operation processing at the startup of the electric pump.
FIG. 3 is a schematic diagram showing an example control table of the electric pump.
FIG. 4 is a graph showing the way that a specified rotational speed and duty ratio vary against the elapsed time from the startup of the electric pump.

### DESCRIPTION OF THE EMBODIMENTS

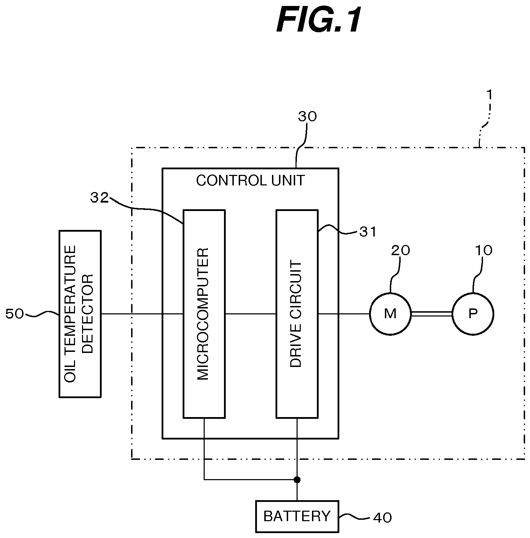

A preferable embodiment of the present invention will be described below with reference to the drawings. FIG. 1 shows an electric pump 1 according to one embodiment of the present invention, and first the configuration of the electric pump 1 according to the present embodiment will be schematically described with reference to this FIG. 1.

The electric pump 1 is constituted essentially by an oil pump 10 discharging oil, a motor 20 as a driving source driving the oil pump 10, and a control unit (also called a driver) 30 controlling the rotation of the motor 20. The electric pump 1 increases and decreases the discharge rate (flow rate) of the oil pump 10 according to the rising and lowering of the rotational speed of the motor 20. That is, as the rotational speed of the motor 20 rises, the discharge rate of the oil pump 10 increases, and as the rotational speed of the motor 20 lowers, the discharge rate of the oil pump 10 decreases.

The oil pump 10 is connected to the rotary shaft of the motor 20 and takes in oil from an oil tank (not shown) by drive force (turning force) transmitted from the motor 20 to discharge into the outside (a cooling system, lubrication system, or operating system). The oil discharged from the oil pump 10 into the outside is made to return to the oil tank so as to circulate. For example, a gear pump that discharges fluid in response to the rotation of a pair of gears engaging with each other, a centrifugal pump that discharges fluid in response to the rotation of an impeller, or so on is applied as the oil pump 10.

The motor 20 is, for example, a three-phase brushless DC motor and comprises coils of three phases (U phase, V phase, W phase) and a rotor constituted by a permanent magnet magnetized with an N pole and an S pole. The motor 20 is configured such that the rotor rotates by current conduction through the coils of the phases being sequentially switched. Note that the motor 20 of the present example is a so-called sensorless-type brushless DC motor, which does not use a position detecting element such as a Hall element, and detects the rotational position of the rotor by using an inductive voltage (back electromotive force) occurring across each coil and, using magnetic-pole-position information obtained based on that, switches current conduction for the phases. Such a DC brushless motor is conventionally, widely known, and hence detailed description thereof is omitted here.

The control unit 30 is configured to comprise a drive circuit 31 to drive the motor 20 and a microcomputer 32 to control the drive circuit 31. For example, the control unit 30 is constituted as a control board on which various electronic and electrical components are mounted. Note that the control unit 30 or part of the control unit 30 may be constituted as an entity separate from the electric pump 1.

The drive circuit 31 is a driver configured by connecting switching elements corresponding to the phases (U phase, V phase, W phase) of the motor 20 in parallel to a battery (power supply) 40. The switching elements of the drive circuit 31 are controlled to be on/off based on a motor control signal (PWM signal) transmitted from the microcomputer 32 that is a higher-level unit, thereby supplying current (three-phase excitation current) to the motor 20 to rotationally drive the motor 20. As the switching elements, for example, MOSFETs or the like are suitably used, but other transistors may be used.

The microcomputer 32 transmits the motor control signal (PWM signal) according to a specified rotational speed set in a control table or the like to the drive circuit 31 so as to control the switching elements of the respective phases of the drive circuit 31 to be on/off, thereby PWM controlling the motor 20. And the microcomputer 32 controls the duty ratio of the motor control signal to control the values of currents supplied to the coils of the respective phases of the motor 20 (to control the voltage applied to the motor 20 in a pseudo manner) so as to increase/decrease the rotational speed of the motor 20. That is, the microcomputer 32 controls the amounts of currents supplied to the motor 20 (that is, the rotational speed of the motor 20) using the duty ratio of the PWM signal outputted to the drive circuit 31 as a control amount.

The microcomputer 32, having inputted thereto the above inductive voltage (back electromotive force) occurring across the coil of each phase of the motor 20, detects the actual rotational speed of the motor 20. An oil temperature detector (oil temperature sensor) 50 to detect the temperature of oil is electrically connected to the microcomputer 32, which is configured such that detection information of the oil temperature detector 50 is inputted thereto. The oil changes in viscosity according to its temperature and has a property in which, as the oil temperature becomes lower, the viscosity becomes higher (the viscosity resistance increases). Hence, the oil temperature detector 50 of the present example functions as a viscosity estimating means for estimating the viscosity (a physical property) of oil based on the temperature of the oil. The oil temperature detector 50 may be mounted inside the electric pump 1. Further, the oil temperature detector 50 may be either of a contact type and a noncontact type.

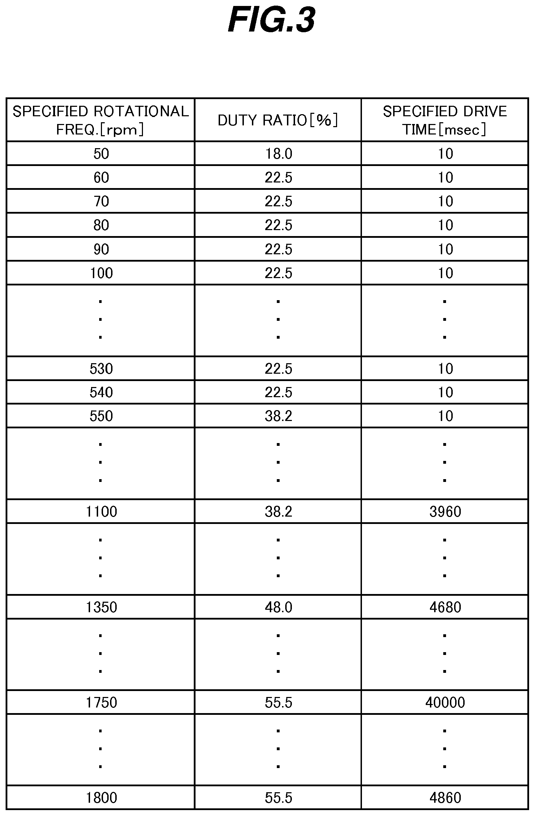

The microcomputer 32 selectively switches the control method of the motor 20 between open loop control and closed loop control (open loop control) to drive the motor 20. At the startup of the electric pump 1, if the temperature of the oil is lower than a specified temperature, the microcomputer 32 drives the motor 20 by open loop control until the rotational speed of the motor 20 reaches a preset target rotational speed (hereinafter called a transition-to-feedback rotational speed) . The open loop control is a control method which drives the motor 20 at a specified rotational speed (duty ratio) set beforehand. In this open loop control, the specified rotational speed (the duty ratio of the motor control signal) is increased stepwise (gradually) to gradually raise the rotational speed of the motor 20 so that the value of current supplied to the coil of each phase of the motor 20 does not exceed a predetermined upper limit (rated current value). A variety of information used in the open loop control is stored in a control table provided in the storage unit of the control unit 30. In the present embodiment, as the above control table, there are prepared a for-low-temperature control table (see FIG. 3) that is set when the temperature of the oil (detected oil temperature) is lower than a specified temperature and a for-high-temperature control table (not shown) that is set when the temperature of the oil (detected oil temperature) is higher than or equal to the specified temperature. When the for-low-temperature control table is set, the open-loop control is performed for a relatively long time. In contrast, when the for-high-temperature control table is set, the open-loop control is performed for a relatively short time. That is, in the for-low-temperature control table, the drive time of the motor 20 by open loop control is set to be a long time (e.g., about 10 times) as compared with the for-high-temperature control table.

In contrast, when the actual rotational speed of the motor 20 has reached the transition-to-feedback rotational speed, the microcomputer 32 drives the motor 20 by feedback control to keep the actual rotational speed at the steady rotational speed (to control the deviation of the actual rotational speed from a steady rotational speed to be zero) . At the startup of the electric pump 1, if the temperature of the oil is higher than or equal to the specified temperature, the microcomputer 32 performs open-loop control for a relatively short time and transitions to feedback control in response to the actual rotational speed of the motor 20 having reached the transition-to-feedback rotational speed.

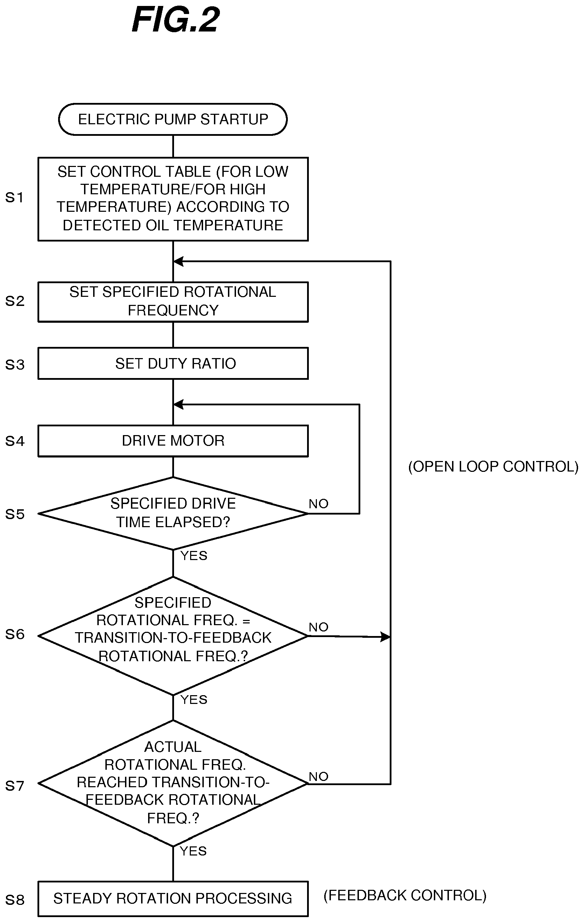

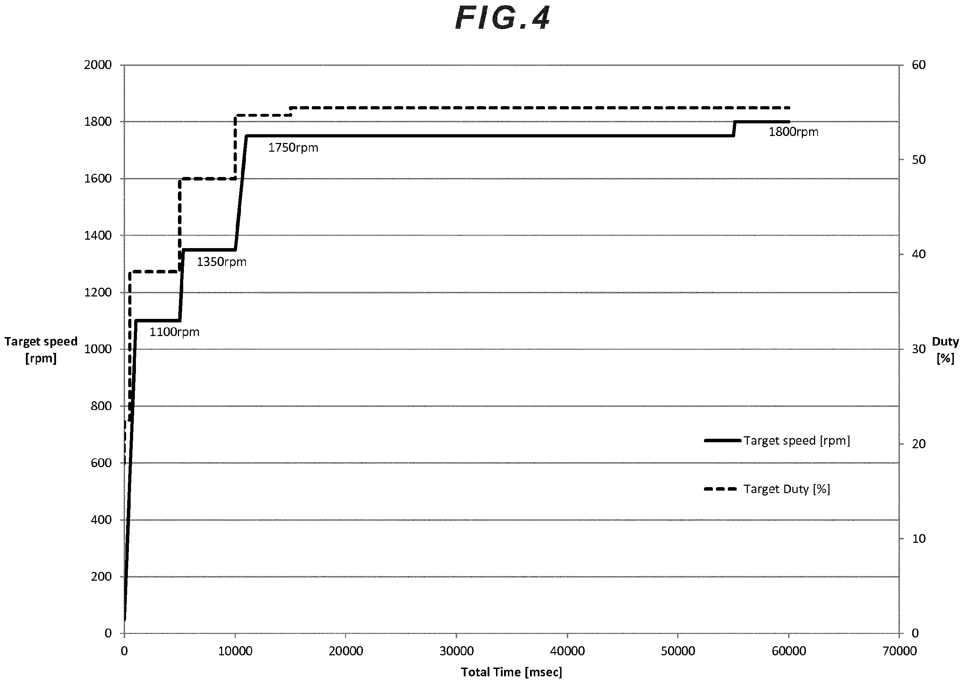

Next, the action at the startup of the electric pump 1 according to the present embodiment will be described with further reference to FIGS. 2 to 4. FIG. 2 is a flow chart showing the flow of operation processing at the startup of the electric pump 1; FIG. 3 is a schematic diagram showing the for-low-temperature control table; and FIG. 4 is a graph showing the way that the specified rotational speed and duty ratio vary against the elapsed time from the startup of the electric pump 1 when the for-low-temperature control table is set. The processing of this flow chart is repeatedly performed with a predetermined period (e.g., every 10 ms).

First, the control unit 30 sets a control table (the for-low-temperature control table or the for-high-temperature control table) according to the oil temperature detected by the oil temperature detector 50 (step S1). Specifically, the control unit 30 determines whether the oil temperature detected by the oil temperature detector 50 is lower than a specified temperature and, if it is lower than the specified temperature, sets the for-low-temperature control table and, if it is higher than or equal to the specified temperature, sets the for-high-temperature control table (not shown). The specified temperature is set based on a characteristic of the electric pump 1, the type of the oil, the usage environment, and the like. A description will be made below illustrating the case where the for-low-temperature control table (FIG. 3) has been set.

If the temperature of the oil is lower than the specified temperature (Yes at step S1), the control unit 30 refers to the control table and sets the initial specified rotational speed therein (step S2). In the control table, as shown in FIG. 3, a correspondence between specified rotational frequencies of the motor 20, duty ratios for the specified rotational frequencies, and drive times of the motor 20 at the specified rotational frequencies (called specified drive times) is specified. Specifically, the control unit 30 reads the initial specified rotational speed (first specified rotational speed) from the control table and sets 50 rpm as the current specified rotational speed. Rotational frequencies of from the initial rotational speed (50 rpm) to the transition-to-feedback rotational speed (1800 rpm) are set as specified rotational frequencies in this control table. And the duty ratios are set at such values that the value of current supplied to the motor 20 does not exceed the rated current value (maximum rated current value) .

Then the control unit 30 refers to the control table and sets the duty ratio corresponding to the current specified rotational speed (step S3). Specifically, the control unit 30 reads the duty ratio corresponding to the first specified rotational speed (50 rpm) from the control table and sets 18% as the duty ratio of the motor control signal.

Then the control unit 30 drives the motor 20 based on PWM control with the duty ratio set at the above step S3 (step S4). As mentioned previously, the magnitude of the duty ratio is related to increase/decrease in the value of current supplied to the motor 20 (that is, increase/decrease in the rotational speed of the motor 20).

Subsequently, the control unit 30 refers to the control table and determines whether the motor 20 has been driven for the specified drive time at the current specified rotational speed (step S5). Specifically, the control unit 30 determines whether the motor 20 has been driven for the specified drive time (10 ms) at the current specified rotational speed (50 rpm). In the present embodiment, 10 ms is set as the specified drive time of the motor 20 basically for each specified rotational speed. However, as shown in FIGS. 3 and 4, for the predetermined, specified rotational frequencies (1100 rpm, 1350 rpm, 1750 rpm), the specified drive time is set to be relatively long in order to promote the temperature rise of the oil through the circulation (turnover) of the oil. Until reaching the foregoing predetermined, specified rotational speed, the specified rotational speed is gradually increased every minute time (10 ms), and when reaching the predetermined, specified rotational speed, the motor 20 is driven over a relatively long time, so that the temperature rise of the oil is promoted while the out-of-step and overload of the motor 20 are prevented.

If the motor 20 has been driven for the specified drive time (Yes at step S5), the control unit 30 determines whether the specified rotational speed set at the above step S2 has reached the transition-to-feedback rotational speed (step S6). At this stage, since the specified rotational speed (the initial rotational speed: 50 rpm) is lower than the transition-to-feedback rotational speed (1800 rpm), the process returns to step S2.

The process having returned to step S2 again, the control unit 30 refers to the control table and sets the next specified rotational speed therein (step S2). Specifically, the control unit 30 reads the next specified rotational speed (second specified rotational speed) from the control table and sets 60 rpm as the current specified rotational speed.

Then the control unit 30 refers to the control table and sets the duty ratio corresponding to the current specified rotational speed (step S3). Specifically, the control unit 30 reads the duty ratio corresponding to the second specified rotational speed (60 rpm) from the control table and sets 22.5% as the duty ratio of the motor control signal.

Then the control unit 30 drives the motor 20 based on PWM control with the duty ratio set at the above step S3 (step S4).

Subsequently, the control unit 30 refers to the control table and determines whether the motor 20 has been driven for the specified time at the current specified rotational speed (step S5). Specifically, the control unit 30 determines whether the motor 20 has been driven for the specified drive time (10 ms) at the current specified rotational speed (60 rpm) .

If the motor 20 has been driven for the specified drive time (Yes at step S5), the control unit 30 determines whether the specified rotational speed set at the above step S2 has reached the transition-to-feedback rotational speed (step S6) . At this stage, since the specified rotational speed (the second rotational speed: 60 rpm) is lower than the transition-to-feedback rotational speed (1800 rpm), the process returns to step S2 again.

Thereafter, until the specified rotational speed becomes equal to the transition-to-feedback rotational speed, the process of steps S2 to S6 (open loop control) is repeated, and, each time, the motor 20 is driven by PWM control with the duty ratio corresponding to the set, specified rotational speed. During this process, the oil is circulated, and because of the heat of friction with the drive portions (such as a rotor and an impeller) of the oil pump 10 and heat generation in the motor 20, battery 40, and engine, the oil is heated, so that the oil temperature gradually rises. As the oil temperature rises in this way, the viscosity of the oil decreases, so that the pump load is reduced.

When the specified rotational speed becomes equal to the transition-to-feedback rotational speed (Yes at step S6), the control unit 30 determines whether the actual rotational speed of the motor 20 has reached the transition-to-feedback rotational speed, that is, whether the actual rotational speed of the motor 20 coincides with the specified rotational speed (step S7). On the other hand, when the actual rotational speed of the motor 20 has not reached the transition-to-feedback rotational speed (No at step S6), the process of steps S2 to S7 (open loop control) is repeated as above until the actual rotational speed of the motor 20 reaches the transition-to-feedback rotational speed.

Here, when the actual rotational speed of the motor 20 reaches the transition-to-feedback rotational speed, the open loop control is switched to feedback control (closed loop control), and steady rotation processing is performed (step S8). In the steady rotation processing, the duty ratio of the PWM signal is controlled (the value of current supplied to the motor 20 is controlled) based on the deviation (rotation deviation) of the actual rotational speed of the motor 20 from a steady rotational speed (4500 rpm) so that the actual rotational speed of the motor 20 is kept at the steady rotational speed. During the execution of the above open loop control, the oil is heated enough, and hence even with transition to feedback control (steady rotation processing) at this stage, there is no danger that current flowing through the motor 20 exceeds the rated current value.

As above, according to the present embodiment, at the startup of the electric pump 1, until the rotational speed of the motor 20 comes near to the transition-to-feedback rotational speed, the motor 20 is driven by the open loop control that restricts the value of current supplied to the motor 20 to lower than a predetermined upper limit (rated current value), and thus the load of the motor 20 at startup can be reduced so that the output of the motor 20 can be suppressed. As a result, the electric pump 1 can be started stably without going beyond the rated output even when the oil is relatively high in viscosity such as at the time of cold start.

Further, in the present embodiment, in the open loop control, by increasing the specified rotational speed (duty ratio) of the motor 20 stepwise, the temperature of the oil can be gradually raised (the viscosity resistance of the oil can be gradually decreased) over time without a rapid increase in the load of the oil pump 10, so that the electric pump 1 can be efficiently started.

Yet further, in the present embodiment, if the temperature of the oil is lower than a specified temperature, after the open loop control is performed for a relatively long time, transition to feedback control is made, and if the temperature of the oil is higher than or equal to the specified temperature, after the open loop control is performed for a relatively short time, transition to feedback control is made, and thus optimum control according to a physical property (the viscosity resistance) of the oil can be performed, so that the motor 20 can be made to quickly reach steady rotation without wasting electric power.

The present invention is not limited to the above embodiment, but can be altered as needed without departing from the spirit of the present invention.

Although the above embodiment illustrates and describes the sensorless three-phase brushless DC motor as the drive source of the electric pump, not being limited to this configuration, for example, another DC motor such as a two-phase brushless DC motor may be used, or a DC motor comprising a position detecting element (rotation detecting means) such as a Hall element may be used as needed.

Although the above embodiment illustrates and describes the configuration where at the startup of the electric pump, a control table (the for-low-temperature control table or the for-high-temperature control table) is set according to the temperature of the oil (detected oil temperature), not being limited to this configuration, for example, the electric pump may be configured such that the for-low-temperature control table is always set regardless of the temperature of the oil at the startup of the electric pump. Or the electric pump may be configured such that the for-low-temperature control table is always set regardless of the temperature of the oil at the first startup of the electric pump and that the for-low-temperature control table or the for-high-temperature control table is set according to the temperature of the oil at the second and later startups of the electric pump.

Although in the above embodiment feedback control based on the deviation of the actual rotational speed from the steady rotational speed is performed in steady rotation processing, not being limited to this configuration, the electric pump may be configured such that feedback control based on the deviation of the actual current value from the steady current value is performed may be made.

Although in the above embodiment transition from open loop control to feedback control is made when the actual rotational speed of the motor has reached the transition-to-feedback rotational speed as a target rotational speed, not being limited to this configuration, the target rotational speed can be set as needed. For example, the electric pump may be configured such that transition from open loop control to feedback control is made when the actual rotational speed of the motor has reached a rotational speed lower or higher by a predetermined rotational speed than the transition-to-feedback rotational speed, or that transition from open loop control to feedback control is made when the rotational speed of the motor has got into a predetermined range with the transition-to-feedback rotational speed as the center. Or the electric pump may be configured such that transition from open loop control to feedback control is made when the elapsed time from the start of motor drive has reached a predetermined time.

Although in the above embodiment two types of, for-low-temperature and for-high-temperature, control tables are prepared, more than two types of control tables may be prepared.

Further, the values of various set rotational frequencies (the transition-to-feedback rotational speed, steady rotational speed, specified rotational frequencies, and the like) shown in the above embodiment are examples and can be changed according to the type, function, required specifications, use conditions, and the like of the electric pump as needed.

Although in the above embodiment the viscosity of the oil is estimated based on the oil temperature, not being limited to this configuration, the electric pump may be configured such that the viscosity of the oil is estimated based on another element such as the load current value or outside air temperature.

Further, the values of the specified rotational frequencies, duty ratios, specified drive times, and the like illustrated in the above embodiment are complete examples and can be changed according to a characteristic of the electric pump, the type of oil, required specifications, and the like as needed.

Note that the electric pump is not limited to an oil pump but can also be applied to other fluid pumps such as air pumps and water pumps.

### EXPLANATION OF NUMERALS AND CHARACTERS

- 1: electric pump
- 10: oil pump
- 20: motor
- 30: control unit
- 31: drive circuit
- 32: microcomputer
- 40: battery
- 50: oil temperature detector

## Claims

1. An electric pump (1) device comprising:
a fluid pump (10) that discharges fluid;
an electric motor (20) that drives the fluid pump (10); and
a control unit (30) that controls the value of current supplied to the electric motor (20) to control rotation of the electric motor (20), thereby controlling the flow rate of fluid discharged from the fluid pump (10), wherein
at startup of the electric motor (20), until the rotational speed of the electric motor (20) comes near to a target rotational speed set beforehand, the control unit (30) drives the electric motor (20) by open loop control that restricts the value of current supplied to the electric motor (20) to lower than a predetermined upper limit, and
when the rotational speed of the electric motor (20) has come near to the target rotational speed, the control unit (30) drives the electric motor (20) by feedback control that keeps the rotational speed at a steady rotational speed,
**characterized in that**:
a plurality of specified rotational speeds for the electric motor (20) are set beforehand in the control unit (30) for the open loop control, and
in the open loop control, the rotational speed of the electric motor (20) is increased stepwise by controlling supply current to the electric motor (20) using the plurality of specified rotational speeds.

2. The electric pump device according to claim 1, comprising a temperature detector (50) that detects a temperature of fluid,
wherein at startup of the electric motor (20), when the temperature of the fluid detected by the temperature detector (50) is lower than a specified temperature, the open loop control is performed for a relatively long time, and when the temperature of the fluid detected by the temperature detector is higher than or equal to the specified temperature, the open loop control is performed for a relatively short time.

## Patentansprüche

1. Eine elektrische Pumpenvorrichtung (1), umfassend:
eine Fluidpumpe (10), die Fluid abgibt;
einen Elektromotor (20), der die Fluidpumpe (10) antreibt; und
eine Steuereinheit (30), die den Wert des dem Elektromotor (20) zugeführten Stroms steuert, um die Drehung des Elektromotors (20) zu steuern, wodurch die Durchflussrate des von der Fluidpumpe (10) abgegebenen Fluids gesteuert wird, wobei
beim Starten des Elektromotors (20), bis die Drehzahl des Elektromotors (20) in die Nähe einer zuvor eingestellten Zieldrehzahl kommt, die Steuereinheit (30) den Elektromotor (20) durch Steuern mit offenem Regelkreis antreibt, das den Wert des dem Elektromotor (20) zugeführten Stroms auf einen niedrigeren Wert als eine vorbestimmte Obergrenze beschränkt, und
wenn die Drehzahl des Elektromotors (20) sich der Zieldrehzahl angenähert hat, treibt die Steuereinheit (30) den Elektromotor (20) durch eine Rückkopplungsregelung an, die die Drehzahl auf einer konstanten Drehzahl hält,
**dadurch gekennzeichnet, dass**:
eine Vielzahl von spezifizierten Drehzahlen für den Elektromotor (20) vorab in der Steuereinheit (30) für das Steuern mit offenem Regelkreis eingestellt werden, und
bei dem Steuern mit offenem Regelkreis die Drehzahl des Elektromotors (20) schrittweise erhöht wird, indem der Versorgungsstrom zum Elektromotor (20) unter Verwendung der Vielzahl vorgegebener Drehzahlen gesteuert wird.

2. Elektrische Pumpenvorrichtung nach Anspruch 1, umfassend einen Temperaturdetektor (50), der eine Temperatur des Fluids erfasst,
wobei beim Starten des Elektromotors (20), wenn die von dem Temperaturdetektor (50) erfasste Temperatur des Fluids niedriger als eine spezifizierte Temperatur ist, das Steuern mit offenem Regelkreis für eine relativ lange Zeit durchgeführt wird, und wenn die von dem Temperaturdetektor erfasste Temperatur des Fluids höher als oder gleich der spezifizierten Temperatur ist, das Steuern mit offenem Regelkreis für eine relativ kurze Zeit durchgeführt wird.

## Revendications

1. Dispositif de pompe électrique (1) comprenant :
une pompe à fluide (10) qui évacue du fluide ;
un moteur électrique (20) qui entraîne la pompe à fluide (10) ; et
un module de commande (30) qui commande la valeur de courant fourni au moteur électrique (20) pour commander la rotation du moteur électrique (20), commandant de ce fait le débit de fluide évacué de la pompe à fluide (10), dans lequel
au démarrage du moteur électrique (20), jusqu'à ce que la vitesse de rotation du moteur électrique (20) approche une vitesse de rotation cible définie au préalable, le module de commande (30) entraîne le moteur électrique (20) par commande en boucle ouverte qui restreint la valeur de courant fourni au moteur électrique (20) à une valeur inférieure à une limite supérieure prédéterminée, et
lorsque la vitesse de rotation du moteur électrique (20) a approché la vitesse de rotation cible, le module de commande (30) entraîne le moteur électrique (20) par asservissement qui maintient la vitesse de rotation à une vitesse de rotation constante,
**caractérisé en ce que** :
une pluralité de vitesses de rotation spécifiées pour le moteur électrique (20) sont définies au préalable dans le module de commande (30) pour la commande en boucle ouverte, et
dans la commande en boucle ouverte, la vitesse de rotation du moteur électrique (20) est augmentée progressivement en commandant le courant d'alimentation vers le moteur électrique (20) en utilisant la pluralité de vitesses de rotation spécifiées.

2. Dispositif de pompe électrique selon la revendication 1, comprenant un détecteur de température (50) qui détecte une température de fluide,
dans lequel au démarrage du moteur électrique (20), lorsque la température du fluide détectée par le détecteur de température (50) est inférieure à une température spécifiée, la commande en boucle ouverte est réalisée pendant une période relativement longue, et lorsque la température du fluide détectée par le détecteur de température est supérieure ou égale à la température spécifiée, la commande en boucle ouverte est réalisée pendant une période relativement courte.
